# EUROPÄISCHE PATENTSCHRIFT

(11) **EP 1 229 051 B1**
(45) Veröffentlichungstag und Bekanntmachung des Hinweises auf die Patenterteilung: **03.09.2003**
(21) Anmeldenummer: 02001122.7
(22) Anmeldetag: 24.01.2002
(51) Int. Cl.: C08F 2/38, C08F 4/34

(54) **Verwendung von Hydroperoxiden als Regler bei Polymerisationen**
Use of hydroperoxyds as regulator in polymerisations
Usage d'hydropéroxydes comme régulateur dans la polymérisation

(30) Priorität: 02.02.2001 DE 10104723
(43) Veröffentlichungstag der Anmeldung: 07.08.2002
(73) Patentinhaber: Wacker Polymer Systems GmbH & Co. KG, 84489 Burghausen (DE)
(72) Erfinder: Weiler, Peter, Dr., 84489 Burghausen (DE); Dietrich, Ulf, Dr., 84503 Altötting (DE); Ball, Peter, Dr., 84547 Emmerting (DE)
(74) Vertreter: Schuderer, Michael, Dr.

(56) Entgegenhaltungen:
- WO-A-91/07440
- WO-A-95/30697
- US-A- 5 698 648

## Beschreibung

Die Erfindung betrifft die Verwendung von nicht copolymerisierbaren Hydroperoxiden der allgemeinen Formel R-O-O-H als Regler bei der radikalisch initiierten Polymerisation von ethylenisch ungesättigten Monomeren.

Zur Initiierung der Polymerisation von ethylenisch ungesättigten Monomeren werden Radikalinitiatoren oder Radikalinitiatorkombinationen verwendet. Wenn man das Molekulargewicht der resultierenden Polymere auf ein gewünschtes Maß verringern möchte, setzt man zusätzlich zum Initiator noch sogenannte Regler ein. Übliche Regler sind beispielsweise Mercaptane wie Mercaptopropionsäure, 2-Mercaptoethanol, 2-Mercaptopropanol, Mercaptoessigsäure, tert.-Butylmercaptan, n-Octylmercaptan, n-Dodecylmercaptan und tert. Dodecylmercaptan. Weitere Beispiele für Regler sind Hydroxylammoniumsalze wie Hydroxylammoniumsulfat; organische Lösungsmittel wie Toluol, Diethylbenzol und Xylol; halogenierte Lösungsmittel wie Chloroform, Ameisensäure, Natriumbisulfit; oder Alkohole wie Methanol. Nachteilig bei diesen Reglern ist, dass Mercaptane oder halogenierte Kohlenwasserstoffe einen intensiven Geruch aufweisen und toxikologisch bedenklich sind. Sowohl Mercaptane als auch halogenierte Kohlenwasserstoffe sind überdies schlecht aus den gebildeten Polymerdispersionen zu entfernen.

Im US-Patent US-A 3,800,007 wird die Masse-, Lösungs-, Emulsions- und Suspensionspolymerisation von α,β-ungesättigten Monomeren mit Alkyl- oder Cycloalkyl-substituierten Cumolperoxiden beschrieben. Die Cumolperoxide werden in einem ersten Schritt, im Temperaturbereich von -10°C bis 70°C, als Hilfsmittel zur Darstellung von peroxidfunktionellen Pfropfund Blockcopolymeren eingesetzt. In einem zweiten Schritt, im Temperaturbereich von 80°C bis 150°C kommt es dann zum Zerfall der Peroxidgruppen und zur Initiierung der Pfropf- oder Blockcopolymerisation mit weiteren Comonomeren.

In der WO-A 95/30697 wird die Verwendung von organischen Persäuren R-CO-O-O-H als Regler bei Polymerisationsrektionen beschrieben. Die Persäure wird dabei zusätzlich zu einem Standardinitiator bei der Polymerisation zugegeben, wobei die Initiatoren so ausgewählt werden, dass die Polymerisation bei einer Temperatur unterhalb der Zerfallstemperatur des Reglers stattfindet.

Aus der WO-A 91/07440 sind copolymerisierbare Allylhydroperoxide als Regler in Polymerisationsverfahren bekannt. Aufgabenstellung war die Bereitstellung reaktiver vernetzbarer Macromonomere für Formkörper und Beschichtungen. Aufgrund der Bifunktionalität dieser Moleküle mit ungesättigter und peroxidischer Gruppe werden Polymere mit bifunktionellen Endgruppen erhalten, welche nachträglich noch durch polymeranaloge Reaktionen zu Epoxidfunktionen umgesetzt werden. Die Allylhydroperoxide werden fester Bestandteil der Polymerkette. Dadurch werden die Eigenschaften des Polymeren verändert, was im allgemeinen nicht gewünscht wird. Die copolymerisierbaren Allylhydroperoxide beeinflussen (verlangsamen) auch das Polymerisationsverhalten der anderen Monomere. Abhängig von den jeweiligen Reaktivitäten kann es so zu unterschiedlichen Polymerzusammensetzungen kommen, die wiederum spezielle Polymereigenschaften bedingen.

Der Erfindung lag die Aufgabe zugrunde, Substanzen zur Verfügung zu stellen, welche sich zur Molekulargewichtsregelung bei Polymerisation eignen, und welche gegebenenfalls auch ohne zusätzliches Initiatorsystem zur simultanen Initiierung und Molekulargewichtsregelung bei der Polymerisation eingesetzt werden können.

Gegenstand der Erfindung ist die Verwendung von nicht copolymerisierbaren Hydroperoxiden der allgemeinen Formel R-O-O-H als Regler bei der radikalisch initiierten Polymerisation von ethylenisch ungesättigten. Monomeren, wobei R die Bedeutung H, C₁-C₁₈-Alkylrest, C₇-C₂₂-Aralkylrest und gesättigte und ungesättigte carbocyclische und heterocyclische Ringe mit 3 bis 18 C-Atomen haben kann, und der Rest R gegebenenfalls substituiert sein kann.

Der Rest R kann unverzweigt oder verzweigt sein und kann darüberhinaus auch substituiert sein, beispielsweise mit einem oder mehreren Substituenten aus der Gruppe umfassend Halogene, Hydroxy-, Alkoxy-, Aryloxy-, Epoxid-, Carboxyl-, Ester-, Amido- , Nitril-, Keton-Gruppe. Bevorzugte Reste R sind Wasserstoff, iso-Propyl-Rest, tert.-Butyl-Rest, tert.-Pentyl-Rest, die 1,1-Dimethyl-Butyl- und -Pentylreste, welche gegebenenfalls noch mit einer OH-Gruppe substituiert sein können. Bevorzugter Aralkylrest ist der Cumolrest. Als carbocyclische Reste werden der Menthol- und der Pinen-Rest bevorzugt.

Besonders bevorzugt werden Wasserstoffperoxid, tert.-Butylhydroperoxid, Cumolhydroperoxid, Diisopropylbenzolhydroperoxid, tert.-Pentylhydroperoxid, 1,1-Dimethylbutylhydroperoxid, 1,1-Dimethylpropylhydroperoxid, 1,1-Dimethyl-3-hydroxybutylhydroperoxid, 1,1,3,3-Tetramethylbutylhydroperoxid, p-Menthylhydroperoxid, Pinanylhydroperoxid, 1-Methylcyclopentylhydroperoxid, 2-Hydroperoxy-2-methyltetrahydrofuran, 1-Methoxycyclohexylhydroperoxid, 1,3,4,5,6,7-Hexahydro-4a(2H)-naphthalenylhydroperoxid, β-Pinenhydroperoxid, 2, 5-Dihydro-2-methyl-2-furanylhydroperoxid.

Die nicht copolymerisierbaren Hydroperoxide können als Regler 5 zusätzlich zu einem Initiatorsystem eingesetzt werden. In einer bevorzugten Ausführungsform werden die Hydroperoxide simultan als Regler und Initiator eingesetzt, ohne dass weitere Radikalstarter verwendet werden. Im allgemeinen beträgt die Menge an Hydroperoxid von 0.01 bis 15 Gew.-%, vorzugsweise 0.1 bis 5 Gew.-%, besonders bevorzugt 0.5 bis 3 Gew.-%, jeweils bezogen auf das Gesamtgewicht der Monomere.

Als Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide bzw. N-Methylolamide und Nitrile, ethylenisch ungesättigte Sulfonsäuren, ethylenisch ungesättigte heterocyclische Verbindungen, Diene, Olefine, Vinylaromaten und Vinylhalogenide.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmeth-acrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren sowie deren Amide bzw. N-Methylolamide und Nitrile sind Acrylsäure, Methacrylsäure, Fumarsäure, Maleinsäure, Acrylamid, N-Methylolacrylamid, N-Methylolmethacrylamid und Acrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind Vinylpyrrolidon, Vinylpyridin.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere, wie mehrfach ethylenisch ungesättigte Comonomere, beispielsweise Divinyladipat, Diallylmaleat, Diallylphthalat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäureund Acrylsäurehydroxyalkylester wie Hydroxyethyl-, Hydroxypropyl- oder Hydroxybutylacrylat oder -methacrylat sowie Verbindungen wie Diacetonacrylamid und Ace-tylacetoxyethylacrylat oder -methacrylat.

Besonders bevorzugt werden Monomere oder Gemische, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Gemische von Vinylacetat mit Ethylen; von Vinylacetat, Ethylen und einem Vinylester von α-verzweigten Monocarbonsäuren mit 9 bis 11 C-Atomen; von n-Butylacrylat mit 2-Ethylhexylacrylat und/oder Methylmethacrylat; von Styrol mit einem oder mehreren Monomeren aus der Gruppe Methylacrylat, Ethylacrylat, Propylacrylat, n-Butylacrylat, 2-Ethylhexylacrylat; von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise -30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die radikalisch initiierte Polymerisation der ethylenisch ungesättigten Monomeren kann grundsätzlich mit allen hierfür bekannten Polymerisationsverfahren erfolgen wie Massepolymerisation, Lösungspolymerisation, Fällungspolymerisation, Suspensionspolymerisation und Emulsionspolymerisation. Bevorzugt werden Lösungs-, Suspensions- und Emulsionspolymerisation.

Die Polymerisationstemperatur beträgt im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid, Trigonot, t-Butyl-per-2-ethylhexanoat und t-Butylperpivalat. Die genannten Initiatoren werden im allgemeinen in einer Menge von 0.01 bis 10.0 Gew.-%, bevorzugt 0.1 bis 0.5 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.01 bis 10.0 Gew.-%, bevorzugt 0.1 bis 0.5 Gew.-%, jeweils bezogen auf das Gesamtgewicht der Monomere. In einer bevorzugten Ausführungs-form werden ausser dem nicht copolymerisierbaren Hydroperoxid keine weiteren Radikalstarter zugesetzt.

Bei den als bevorzugt genannten Verfahren der Suspensions- und Emulsionspolymerisation wird in Gegenwart von oberflächenaktiven Substanzen wie Schutzkolloiden und/oder Emulgatoren polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die als Regler verwendeten Hydroperoxide können insgesamt vorgelegt werden, insgesamt zudosiert werden oder in Anteilen vorgelegt werden und der Rest zudosiert werden. Werden die Hydroperoxide nur als Regler und in Kombination mit einem Initiator eingesetzt, kann so vorgegangen werden, dass das Hydroperoxid insgesamt vorgelegt wird, oder insgesamt zusammen mit Monomer oder Initiator zudosiert wird, oder teilweise vorgelegt wird und der Rest zusammen mit Monomer oder Initiator zudosiert wird. Bei den Verfahrensvarianten, bei denen das Hydroperoxid insgesamt oder teilweise zudosiert wird, wird vorzugsweise so vorgegangen, dass bei Initiierung der Polymerisation der Hydroperoxid-Regler in einem molaren Verhältnis von mehr als 0.2 : 1 zum Initiator zudosiert wird. Diese Dosierrate kann im Verlauf der Polymerisation beliebig gesteigert werden.

Werden die Hydroperoxide sowohl als Regler als auch als Initiator eingesetzt, kann so vorgegangen werden, dass das Hydroperoxid insgesamt vorgelegt wird, oder insgesamt zusammen mit Monomer zudosiert wird, oder teilweise vorgelegt wird und der Rest zusammen mit Monomer zudosiert wird, und das Reduktionsmittel jeweils zudosiert wird. Bevorzugt werden die Dosierverfahren. Besonders bevorzugt wird das Hydroperoxid in solchen Anteilen vorgelegt bzw. dosiert, dass das molare Verhältnis von Hydroperoxid zu Reduktionsmittel von 1,2 : 1 bis 20 : 1, bevorzugt 1.5 : 1 bis 7.5 : 1 beträgt.

Nach Abschluss der Polymerisation können Restmonomere und flüchtige Komponenten mittels Nachpolymerisation, Destillation, Durchleiten von Inertgas oder einer Kombination dieser Massnahmen entfernt werden. Zur Herstellung von in Wasser redispergierbaren Polymerpulvern können die wässrigen Dispersionen, nach Zusatz von Schutzkolloiden als Verdüsungshilfe, in bekannter Weise sprühgetrocknet werden.

Die mittels der erfindungsgemäßen Verwendung von Hydroperoxid-Reglern zugänglichen Polymerisate können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien, Fasern, Holz und Papier.

### Beispiel 1:

### Herstellung eines NMA-Homopolymeren mit tert.-Butylhydroperoxid-Regelung

In einem Reaktor mit 20 Liter Volumen wurden 6.73 kg deionisiertes Wasser und 5.4 g einer 40 %-igen tert.-Butylhydroperoxidlösung vorgelegt und unter Rühren auf 60°C erhitzt. Bei Erreichen des Temperaturgleichgewichts wurden die Initiatordosierungen und 5 Minuten später die Monomerdosierung eingefahren.

Initiatordosierung 1: 804 g deionisiertes Wasser, 78 g Natriumperoxodisulfat und 36 g 40 %-ige tert.-Butylhydroperoxidlösung Initiatordosierung 2: 1.5 kg deionisiertes Wasser, 78 g Natriumhydrogencarbonat und 83 g Natriumformaldehydsulfoxylat Monomerdosierung: 9.1 kg 48 %-ige wässrige N-Methylolacrylamidlösung (NMA)

Nach Ende der einstündigen Monomerdosierung ließ man die Initiatordosierungen noch eine halbe Stunde nachlaufen. Der Festgehalt der wässrigen Lösung war 25 % und der K-Wert war 41.

### Vergleichsbeispiel 2:

### Herstellung eines NMA-Homopolymeren ohne Regelung

In einem Reaktor mit 2 Liter Volumen wurden 955.8 g deionisiertes Wasser vorgelegt und unter Rühren auf 60°C erhitzt. Bei Erreichen des Temperaturgleichgewichts wurden die Initiatordosierungen und 5 Minuten später die Monomerdosierung eingefahren.

Initiatordosierung 1: 67.7 g deionisiertes Wasser und 6.6 g Natriumperoxodisulfat

Initiatordosierung 2: 124.4 g deionisiertes Wasser, 6.6 g Natriumhydrogencarbonat und 7 g Natriumformaldehydsulfoxylat Monomerdosierung: 762.4 g 48 %-ige wässrige N-Methylolacrylamidlösung

Nach Ende der einstündigen Monomerdosierung ließ man die Initiatordosierungen noch eine halbe Stunde nachlaufen.

Der Festgehalt der wässrigen Lösung war 18.6 % und der K-Wert war 87.

### Vergleichsbeispiel 3:

### Herstellung eines Suspensionspolymerisates ohne Regelung

In einem 2 Liter Reaktor wurden 883.4 g deionisiertes Wasser, 24.9 g 1 %-ige wässrige Kupferacetat-Lösung, 120 g 5 %-ige Polyvinylpyrrolidon-Lösung (K-Wert: 90), 279 g Butylacrylat und 677.4 g Styrol vorgelegt. Der pH-Wert der Mischung wurde auf 6 eingestellt. Nach Zugabe der Initiatoren-Mischung aus 10.8 g t-Butyl-peroxyneodecanoat (75 %-ige Lösung in Aliphaten), 8 g t-Butylperoxypivalat (75 %-ige Lösung in Aliphaten) und 10.2 g t-Butylperoxy-2-ethylhexanoat wurde unter Rühren auf 55°C erhitzt. Nach 4 Stunden wurde die Reaktionstemperatur auf 70°C erhöht und nach weiteren 4 Stunden auf 90°C. Der Ansatz wurde abgekühlt und die Suspensionspolymerisate mit deionisiertem Wasser gewaschen, abgesaugt und getrocknet. Der K-Wert war 57.

### Beispiel 4:

### Herstellung eines Suspensionspolymerisates mit tert.-Butylhydroperoxid-Regelung

In einem 2 Liter Reaktor wurden 860.8 g deionisiertes Wasser, 7.1 g 1 %-ige wässrige Kupferacetat-Lösung, 150.8 g 5 %-ige Polyvinylpyrrolidon-Lösung (K-Wert: 90), 11.8 g 40 %-ige tert.-Butylhydroperoxidlösung, 263.9 g Butylacrylat und 640.9 g Styrol vorgelegt. Der pH-Wert der Mischung wurde auf 6 eingestellt. Nach Zugabe der Initiatorenmischung aus 10.2 g tert.-Butyl-peroxyneodecanoat, 7.5 g tert.-Butyl-perpivalat und 7.7 g tert.-Butyl-per-2-ethylhexanoat wurde unter Rühren auf 55°C erhitzt. Nach 4 Stunden wurde die Reaktionstemperatur auf 70°C erhöht und nach weiteren 4 Stunden auf 90°C. Der Ansatz wurde abgekühlt und die Suspensionspolymerisate mit deionisiertem Wasser gewaschen, abgesaugt und getrocknet. Der K-Wert war 45.

### Vergleichsbeispiel 5:

### Herstellung eines Suspensionspolymerisates mit Dodecylmercaptan-Regelung

In einem 2 Liter Reaktor wurden 873 g deionisiertes Wasser, 7 g 1 %-ige wässrige Kupferacetat-Lösung, 150.4 g 5 %-ige Polyvinylpyrrolidon-Lösung (K-Wert: 90), 4.7 g Dodecylmercaptan, 263.1 g Butylacrylat und 639 g Styrol vorgelegt. Der pH-Wert der Mischung wurde auf 6 eingestellt. Nach Zugabe der Initiatoren 10.2 g tert.-Butyl-peroxyneodecanoat (75 %-ige Lösung in Aliphaten), 7.5 g tert.-Butylperoxypivalat (75 %-ige Lösung in Aliphaten) und 5.8 g tert.-Butylperoxy-2-ethylhexanoat wurde unter Rühren auf 55°C erhitzt. Nach 4 Stunden wurde die Reaktionstemperatur auf 70°C erhöht und nach weiteren 4 Stunden auf 90°C. Der Ansatz wurde abgekühlt und die Suspensionspolymerisate mit deionisiertem Wasser gewaschen, abgesaugt und getrocknet. Der K-Wert war 50.

### Vergleichsbeispiel 6:

### Herstellung eines Emulsionspolymerisates ohne Regelung

In einem 2 Liter Reaktor wurden 345.4 g deionisiertes Wasser, 11.8 g Natriumlaurylsulfat, 93.9 g Styrol und 34.5 g Butylacrylat vorgelegt und unter Rühren auf 80°C aufgeheizt. Bei 40°C wurde die Initiatorlösung (8.9 g Kaliumperoxodisulfat und 246.7 g deionisiertes Wasser) in den Reaktor gegeben. 15 Minuten nach Erreichen des Temperaturgleichgewichts bei 80°C wurden die Initiator- und die Monomerdosierung gestartet. Initiatordosierung: 296 g deionisiertes Wasser und 10.9 g Kaliumperoxodisulfat

Monomerdosierung: 122.5 g deionisiertes Wasser, 577.1 g Styrol, 212.2 g Butylacrylat, 16.5 g 30 %-ige wässrige Acrylamidlösung, 17 g 50 %-ige wässrige 2-Acrylamido-2-methylpropansulfonsäure, 9.9 g Acrylsäure, 44.4 g Methacrylsäure, 6.0 g 12.5 %-ige wässrige Ammoniaklösung und 11.8 g Natriumlaurylsulfat.

Der pH-Wert wurde während der Reaktion auf 4 bis 4.5 eingestellt. Nach Ende der vierstündigen Monomerdosierung ließ man die Initiatordosierung noch eine Stunde nachlaufen und stellte den pH-Wert mit 12.5 %-iger Ammoniaklösung auf 7.5 ein.

Der Festgehalt war 53 %, die Viskosität 14.000mPas und der K-Wert 69.

### Vergleichsbeispiel 7

### Herstellung eines Emulsionspolymerisates mit Dodecylmercaptan-Regelung

In einem 2 Liter Reaktor wurden 345.4 g deionisiertes Wasser, 11.8 g Natriumlaurylsulfat, 93.9 g Styrol und 34.5 g Butylacrylat vorgelegt und unter Rühren auf 80°C aufgeheizt. Bei 40°C wurde die Initiatorlösung (8.9 g Kaliumperoxodisulfat und 246.7 g deionisiertes Wasser) in den Reaktor gegeben. 15 Minuten nach Erreichen des Temperaturgleichgewichts bei 80°C wurden die Initiator- und die Monomerdosierung gestartet. Initiatordosierung: 296 g deionisiertes Wasser und 10.9 g Kaliumperoxodisulfat

Monomerdosierung: 122.5 g deionisiertes Wasser, 577.1 g Styrol, 212.2 g Butylacrylat, 4.9 g Dodecylmercaptan, 16.5 g 30%-ige wässrige Acrylamidlösung, 17 g 50 %-ige wässrige 2-Acrylamido-2-methylpropansulfonsäure, 9.9 g Acrylsäure, 44.4 g Methacrylsäure, 6 g 12.5 %-ige wässrige Ammoniaklösung und 11.8 g Natriumlaurylsulfat

Der pH-Wert wurde während der Reaktion auf 4 bis 4.5 eingestellt. Nach Ende der vierstündigen Monomerdosierung ließ man die Initiatordosierung noch eine Stunde nachlaufen und stellte den pH-Wert mit 12.5 %-iger Ammoniaklösung auf 7.5 ein.

Der Festgehalt war 52.1 %, die Viskosität 1.840 mPas und der K-Wert 34.

### Beispiel 8

### Herstellung eines Emulsionspolymerisates mit tert.-Butylhydroperoxid-Regelung

In einem 2 Liter Reaktor wurden 198.2 g deionisiertes Wasser, 49.5 g 40 %-ige tert.-Butylhydroperoxidlösung, 11.9 g Natriumlaurylsulfat, 94.3 g Styrol und 34.7 g Butylacrylat vorgelegt und unter Rühren auf 80°C aufgeheizt. Bei 40°C wurde die Initiatorlösung (8.9 g Kaliumperoxodisulfat und 247.7 g deionisiertes Wasser) in den Reaktor gegeben. 15 Minuten nach Erreichen des Temperaturgleichgewichts bei 80°C wurden die Initiator- und die Monomerdosierung gestartet. Initiatordosierung: 297.3 g deionisiertes Wasser und 10.9 g Kaliumperoxodisulfat

Monomerdosierung: 217.1 g deionisiertes Wasser, 579.5 g Styrol, 213 g Butylacrylat, 16.5 g 30 %-ige wässrige Acrylamidlösung, 17.1 g 50 %-ige wässrige 2-Acrylamido-2-methylpropansulfonsäure, 9.9 g Acrylsäure, 44.6 g Methacrylsäure, 6 g 12.5 %-ige wässrige Ammoniaklösung und 11.9 g Natriumlaurylsulfat

Der pH-Wert wurde während der Reaktion auf 4 bis 4.5 eingestellt. Nach Ende der vierstündigen Monomerdosierung ließ man die Initiatordosierung noch eine Stunde nachlaufen und stellte den pH-Wert mit 12.5 %-iger Ammoniaklösung auf 7.5 ein.

Der Festgehalt war 54.7 %, die Viskosität 3.750 mPas und der K-Wert 29.

### Beispiel 9

Herstellung eines Emulsionspolymerisates mit tert.-Butylhydroperoxid-Regelung und -Initiierung.

In einem 2 Liter Reaktor .wurden 440.3 g deionisiertes Wasser, 16.7 g 20 %-ige Natrium-Dihexylsulfosuccinat-Lösung, 95.3 g Styrol und 35 g Butylacrylat vorgelegt und unter Rühren auf 80°C aufgeheizt. Bei 70°C wurden die Initiatordosierungen gestartet.

Initiatordosierung 1: 150.1 g deionisiertes Wasser und 5 g Natriumformaldehydsulfoxylat

Initiatordosierung 2: 29 g deionisiertes Wasser, 3.8 g 40 %-ige tert.-Butylhydroperoxidlösung

Nach einer Stunde wurde die Konzentration der Initiatordosierung 2 erhöht und die Monomerdosierung eingefahren. Initiatordosierung 2a: 116.1 g deionisiertes Wasser, 46.3 g 40 %-ige tert.-Butylhydroperoxidlösung

Monomerdosierung: 186.3 g deionisiertes Wasser, 585.3 g Styrol, 215.2 g Butylacrylat, 16.7 g 30 %-ige wässrige Acrylamidlösung, 17.3 g 50 %-ige wässrige 2-Acrylamido-2-methylpropansulfonsäure, 10 g Acrylsäure, 45 g Methacrylsäure, 6 g 12.5 %-ige wässrige Ammoniaklösung, 10 g Fettalkoholpolyglykolether mit 12 bis 14 C-Atomen im Fettalkohol und 50 EO-Einheiten und 32.3 g 31 %-ige wässrige Lösung eines Dinatriumlaurylethersulfosuccinats mit 6 EO-Einheiten.

Der pH-Wert wurde während der Reaktion auf 4 bis 4.5 eingestellt. Nach Ende der vierstündigen Monomerdosierung ließ man die Initiatordosierungen 1 und 2a noch eine Stunde nachlaufen und stellte den pH-Wert mit 12.5 %-iger Ammoniaklösung auf 7.5 ein.

Der Festgehalt war 49.9 %, die Viskosität 26 mPas und der K-Wert 32.

### Beispiel 10

Herstellung eines Emulsionspolymerisates mit tert.-Butylhydroperoxid-Regelung und -Initiierung.

In einem 2 Liter Reaktor wurden 440.3 g deionisiertes Wasser, 16.7 g 20 %-ige Natrium-Dihexylsulfosuccinat-Lösung, 95.3 g Styrol und 35 g Butylacrylat vorgelegt und unter Rühren auf 80°C aufgeheizt. Bei 70°C wurden die Initiatordosierungen gestartet.

Initiatordosierung 1: 150.1 g deionisiertes Wasser und 5.7 g Ascorbinsäure

Initiatordosierung 2: 29 g deionisiertes Wasser, 3.8 g 40 %-ige tert.-Butylhydroperoxidlösung

Nach einer Stunde wurde die Konzentration der Initiatordosierung 2 erhöht und die Monomerdosierung eingefahren. Initiatordosierung 2a: 116.1 g deionisiertes Wasser, 46.3 g 40 %-ige tert.-Butylhydroperoxidlösung

Monomerdosierung: 186.3 g deionisiertes Wasser, 585.3 g Styrol, 215.2 g Butylacrylat, 16.7 g 30 %-ige wässrige Acrylamidlösung, 17.3 g 50 %-ige wässrige 2-Acrylamido-2-methylpropansulfonsäure, 10 g Acrylsäure, 45 g Methacrylsäure, 6 g 12.5 %-ige wässrige Ammoniaklösung, 10 g Fettalkoholpolyglykolether mit 12 bis 14 C-Atomen im Fettalkohol und 50 EO-Einheiten und 32.3 g 31 %-ige wässrige Lösung eines Dinatriumlaurylethersulfosuccinats mit 6 EO-Einheiten.

Der pH-Wert wurde während der Reaktion auf 4 bis 4.5 eingestellt. Nach Ende der vierstündigen Monomerdosierung ließ man die Initiatordosierungen 1 und 2a noch eine Stunde nachlaufen und stellte den pH-Wert mit 12.5 %-iger Ammoniaklösung auf 7.5 ein.

Der Festgehalt war 49.9 %, die Viskosität 50 mPas und der K-Wert 33.

### Beispiel 11

Herstellung eines Emulsionspolymerisates mit tert.-Butylhydroperoxid-Regelung und -Initiierung.

In einem 2 Liter Reaktor wurden 440.3 g deionisiertes Wasser, 16.7 g 20 %-ige Natrium-Dihexylsulfosuccinat-Lösung, 95.3 g Styrol und 35 g Butylacrylat vorgelegt und unter Rühren auf 80°C aufgeheizt. Bei 70°C wurden die Initiatordosierungen gestartet.

Initiatordosierung 1: 150.1 g deionisiertes Wasser und 4.1 g Natriumsulfit

Initiatordosierung 2: 29 g deionisiertes Wasser, 3.8 g 40 %-ige tert.-Butylhydroperoxidlösung

Nach einer Stunde wurde die Konzentration der Initiatordosierung 2 erhöht und die Monomerdosierung eingefahren. Initiatordosierung 2a: 116.1 g deionisiertes Wasser, 46.3 g 40 %-ige tert.-Butylhydroperoxidlösung

Monomerdosierung: 186.3 g deionisiertes Wasser, 585.3 g Styrol, 215.2 g Butylacrylat, 16.7 g 30 %-ige wässrige Acrylamidlösung, 17.3 g 50 %-ige wässrige 2-Acrylamido-2-methylpropansulfonsäure, 10 g Acrylsäure, 45 g Methacrylsäure, 6 g 12.5 %-ige wässrige Ammoniaklösung, 10 g Fettalkoholpolyglykolether mit 12 bis 14 C-Atomen im Fettalkohol und 50 EO-Einheiten und 32.3 g 31 %-ige wässrige Lösung eines Dinatriumlaurylethersulfosuccinats mit 6 EO-Einheiten.

Der pH-Wert wurde während der Reaktion auf 4 bis 4.5 eingestellt. Nach Ende der vierstündigen Monomerdosierung ließ man die Initiatordosierungen 1 und 2a noch eine Stunde nachlaufen und stellte den pH-Wert mit 12.5 %-iger Ammoniaklösung auf 7.5 ein.

Der Festgehalt war 49.1 %, die Viskosität 76 mPas und der K-Wert 33.

### Vergleichsbeispiel 12

### Herstellung eines Emulsionspolymerisates ohne Regelung

In einem 5 Liter Laborautoklaven wurden 887.9 g deionisiertes Wasser, 41.3 g 20 %-ige Natrium-Dihexylsulfosuccinat-Lösung, 15.1 g 10 %-ige Essigsäure und 206.5 g Vinylacetat vorgelegt, unter Rühren auf 75°C erwärmt und Ethylen bis 30 bar aufgedrückt. Dieser Druck wurde während der gesamten Dosierzeit der Monomeren beibehalten. Bei Temperaturgleichgewicht wurden die Initiatordosierungen, eine 3 %-ige wässrige Lösung von Kaliumperoxodisulfat und eine 1.5 %-ige wässrige Lösung von Natriumformaldehydsulfoxylat, eingefahren. Zwei Minuten nach Reaktionsbeginn wurde die Monomer- und Emulgatordosierung gestartet.

Monomerdosierung: 1.86 kg Vinylacetat

Emulgatordosierung: 991.1 g deionisiertes Wasser, 20.7 g 50 %ige wässrige 2-Acrylamido-2-methylpropansulfonsäure und 206.5 g 30 %-ige Natriumlaurylsulfat-Lösung

Nach Ende der dreistündigen Monomerdosierung ließ man die Initiatordosierungen noch eine Stunde nachlaufen.

Der Festgehalt war 51.2 %, die Viskosität 50 mPas, der K-Wert 110 und die Tg 6.4°C.

### Vergleichsbeispiel 13

### Herstellung eines Emulsionspolymerisates mit Dodecylmercaptan-Regelung

In einem 5 Liter Laborautoklaven wurden 888.8 g deionisiertes Wasser, 40.9 g 20 %-ige Natrium-Dihexylsulfosuccinat-Lösung, 15 g 10 %-ige Essigsäure und 204.4 g Vinylacetat vorgelegt, unter Rühren auf 75°C erwärmt und Ethylen bis 30 bar aufgedrückt. Dieser Druck wurde während der gesamten Dosierzeit der Monomeren beibehalten. Bei Temperaturgleichgewicht wurden die Initiatordosierungen, eine 3 %-ige wässrige Lösung von Kaliumperoxodisulfat und eine 1.5 %-ige wässrige Lösung von Natriumformaldehydsulfoxylat, eingefahren. Zwei Minuten nach Reaktionsbeginn wurde die Monomer- und Emulgatordosierung gestartet. Monomerdosierung: 1.84 kg Vinylacetat und 20.4 g Dodecylmercaptan

Emulgatordosierung: 991 g deionisiertes Wasser, 20.7 g 50 %-ige wässrige 2-Acrylamido-2-methylpropansulfonsäure und 204.4 g 30 %-ige Natriumlaurylsulfat-Lösung

Nach Ende der dreistündigen Monomerdosierung ließ man die Initiatordosierungen noch eine Stunde nachlaufen.

Der Festgehalt war 51.2 %, die Viskosität 47 mPas, der K-Wert 63 und die Tg 7.4°C.

### Beispiel 14

### Herstellung eines Emulsionspolymerisates mit tert. Butylhydroperoxid-Regelung

In einem 5 Liter Laborautoklaven wurden 1080 g deionisiertes Wasser, 71.7 g 20 %-ige Natrium-Dihexylsulfosuccinat-Lösung, 3 g 10 %-ige Ameisensäure und 177 g Vinylacetat vorgelegt, unter Rühren auf 50°C erwärmt und Ethylen bis 30 bar aufgedrückt. Dieser Druck wurde beibehalten bis 300g Ethylen eingebaut waren. Bei Temperaturgleichgewicht wurden die Initiatordosierungen, eine 3 %-ige wässrige tert.- Butylhydroperoxid-Lösung und eine 5 %-ige wässrige Lösung von Natriumformaldehydsulfoxylat, eingefahren. Dreissig Minuten nach Reaktionsbeginn wurde die Monomer- und Emulgatordosierung gestartet.

Monomerdosierung: 1.61 kg Vinylacetat

Emulgatordosierung: 1080 g deionisiertes Wasser, 16.7 g 50 %ige wässrige 2-Acrylamido-2-methylpropansulfonsäure, 26.9 g Fettalkoholpolyglykolether mit 12 bis 14 C-Atomen im Fettalkohol und 50 EO-Einheiten und 71.7 g 25 %-ige wässrige Lösung eines Alkylethersulfats mit iso-Tridecylrest und 20 EO-Einheiten. Nach Ende der fünfstündigen Monomerdosierung ließ man die Initiatordosierungen noch eine Stunde nachlaufen.

Der Festgehalt war 44.4 %, die Viskosität 23 mPas, der K-Wert 69 und die Tg 5.3°C.

Die Ergebnisse der Molekulargewichtsbestimmung sind in Tabelle 1 zusammengefasst.

Das Molekulargewicht wurde mittelbar über den K-Wert ermittelt (Methode nach Fikentscher, DIN 53726). Dazu wurden 100 ml einer 1 %-igen Polymerlösung in THF hergestellt. 1 g Polymer wurde in Form des Lösung oder Dispersion auf 1 % genau in einen Messkolben eingewogen und soviel Wasser dazugegeben, dass die Gesamtwassermenge 8.0 g betrug. Diese Probe wurde homogenisiert und unter Rühren mit THF bzw. Wasser versetzt bis eine klare Lösung erhalten wurde, und anschließend mit THF bzw. Wasser auf 100 ml aufgefüllt. Die relative Viskosität bzw. Fliessgeschwindigkeit der einprozentigen Polymerlösung wurde mit dem reinen Lösungsmittel verglichen. Nach Fikentscher wurden die K-Werte dann aus den relativen Viskositäten und der Polymerkonzentration berechnet.

Mit den erfindungsgemäß als Regler verwendeten Hydroperoxiden kann der K-Wert von Emulsionspolymerisaten, welcher ohne Regelung im allgemeinen zwischen 70 und 120 beträgt, auf Werte von 10 bis 40 reduziert werden, ohne dass die vorher diskutierten Nachteile herkömmlicher Regler auftreten (Geruch, Kontamination der Polymerdispersionen).

**Tabelle 1:**

| Beispiel | Polymerisations-Verfahren | Regler | Molekulargewicht (K-Wert) |
|---|---|---|---|
| Beispiel 1 | Lösung | TBHP | 41 |
| Vergl.bsp. 2 | Lösung | | 87 |
| Vergl.bsp. 3 | Suspension | | 57 |
| Beispiel 4 | Suspension | TBHP | 45 |
| Vergl.bsp. 5 | Suspension | DDM | 50 |
| Vergl.bsp. 6 | Emulsion | | 69 |
| Vergl.bsp. 7 | Emulsion | DDM | 34 |
| Beispiel 8 | Emulsion | TBHP | 29 |
| Beispiel 9 | Emulsion | TBHP | 32 |
| Beispiel 10 | Emulsion | TBHP | 33 |
| Beispiel 11 | Emulsion | TBHP | 33 |
| Vergl.bsp. 12 | Emulsion | | 110 |
| Vergl.bsp. 13 | Emulsion | DDM | 63 |
| Beispiel 14 | Emulsion | TBHP | 69 |
| TBHP = tert.-Butylhydroperoxid, DDM = Dodecylmercaptan | | | |

## Patentansprüche

1. Verwendung von nicht copolymerisierbaren Hydroperoxiden der allgemeinen Formel R-O-O-H als Regler bei der radikalisch initiierten Polymerisation von ethylenisch ungesättigten Monomeren, wobei R die Bedeutung H, C₁-C₁₈-Alkylrest, C₇-C₂₂-Aralkylrest und gesättigte und ungesättigte carbocyclische und heterocyclische Ringe mit 3 bis 18 C-Atomen haben kann, und gegebenenfalls substituiert sein kann.

2. Verwendung gemäß Anspruch 1, **dadurch gekennzeichnet, dass** der Rest R die Bedeutung Wasserstoff, iso-Propyl, tert.-Butyl, tert.-Pentyl, 1,1-Dimethyl-Butyl oder 1,1-Dimethyl-Pentyl hat, wobei die genannten Reste gegebenenfalls noch mit einer OH-Gruppe substituiert sein können.

3. Verwendung gemäß Anspruch 1, **dadurch gekennzeichnet, dass** als Regler ein oder mehrere Hydroperoxide verwendet werden, aus der Gruppe umfassend Wasserstoffperoxid, tert.-Butylhydroperoxid, Cumolhydroperoxid, Diisopropylbenzolhydroperoxid, tert.-Pentylhydroperoxid, 1,1-Dimethylbutylhydroperoxid, 1,1-Dimethylpropylhydroperoxid, 1,1-Dimethyl-3-hydroxybutylhydroperoxid, 1,1,3,3-Tetramethylbutylhydroperoxid, p-Menthylhydroperoxid, Pinanylhydro-peroxid, 1-Methylcyclopentylhydroperoxid, 2-Hydroperoxy-2-methyltetrahydrofuran, 1-Methoxycyclohexylhydroperoxid, 1,3,4,5,6,7-Hexahydro-4a(2H)-naphthalenylhydroperoxid, β-Pinenhydroperoxid, 2,5-Dihydro-2-methyl-2-furanylhydroperoxid.

4. Verwendung gemäß Anspruch 1 bis 3, **dadurch gekennzeichnet, dass** ein oder mehrere Monomere polymerisiert werden, aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide bzw. N-Methylolamide und Nitrile, ethylenisch ungesättigte Sulfonsäuren, ethylenisch ungesättigte heterocyclische Verbindungen, Diene, Olefine, Vinylaromaten und Vinylhalogenide.

5. Verwendung gemäß Anspruch 1 bis 4, **dadurch gekennzeichnet, dass** die nicht copolymerisierbaren Hydroperoxide simultan als Regler und Initiator verwendet werden, ohne dass weitere Radikalstarter verwendet werden.

6. Verwendung gemäß Anspruch 1 bis 5, **dadurch gekennzeichnet, dass** die radikalisch initiierte Polymerisation der ethylenisch ungesättigten Monomeren mittels Massepolymerisation, Lösungspolymerisation, Fällungspolymerisation, Suspensionspolymerisation oder Emulsionspolymerisation erfolgt.

7. Verwendung gemäß Anspruch 1 bis 5, **dadurch gekennzeichnet, dass** die radikalisch initiierte Polymerisation der ethylenisch ungesättigten Monomeren mittels Suspensions- oder Emulsionspolymerisation in Gegenwart von oberflächenaktiven Substanzen wie Schutzkolloiden und/oder Emulgatoren erfolgt.

8. Verwendung gemäß Anspruch 1 bis 7, **dadurch gekennzeichnet, dass** die nicht copolymerisierbaren Hydroperoxide insgesamt oder teilweise zudosiert werden.

9. Verwendung gemäß Anspruch 8, **dadurch gekennzeichnet, dass** die Hydroperoxide nur als Regler und in Kombination mit einem Initiator eingesetzt werden, und bei Initiierung der Polymerisation das Hydroperoxid in einem molaren Verhältnis von mehr als 0.2 : 1 zum Initiator zudosiert wird.

10. Verwendung gemäß Anspruch 8, **dadurch gekennzeichnet, dass** das Hydroperoxide sowohl als Regler als auch als Initiator eingesetzt wird, und in solchen Anteilen vorgelegt und dosiert wird, dass das molare Verhältnis von Hydroperoxid zu Reduktionsmittel von 1.2 : 1 bis 20 : 1 beträgt.

## Claims

1. Use of noncopolymerizable hydroperoxides of the formula R-O-O-H as regulators in the free-radically initiated polymerization of ethylenically unsaturated monomers, where R is H, a C₁-C₁₈-alkyl radical, a C₇-C₂₂-aralkyl radical or a saturated or unsaturated carbocyclic or heterocyclic ring having from 3 to 18 carbon atoms, and may be substituted or unsubstituted.

2. Use according to Claim 1, **characterized in that** the radical R is hydrogen, isopropyl, tert-butyl, tert-pentyl, 1,1-dimethylbutyl or 1,1-dimethylpentyl, where the radicals mentioned may also be substituted by an OH group.

3. Use according to Claim 1, **characterized in that** one or more hydroperoxides selected from the group consisting of hydrogen peroxide, tert-butyl hydroperoxide, cumene hydroperoxide, diisopropylbenzene hydroperoxide, tert-pentyl hydroperoxide, 1,1-dimethylbutyl hydroperoxide, 1,1-dimethylpropyl hydroperoxide, 1,1-dimethyl-3-hydroxybutyl hydroperoxide, 1,1,3,3-tetramethylbutyl hydroperoxide, p-menthyl hydroperoxide, pinanyl hydroperoxide, 1-methylcyclopentyl hydroperoxide, 2-hydroperoxy-2-methyltetrahydrofuran, 1-methoxycyclohexyl hydroperoxide, 1,3,4,5,6,7-hexa-hydro-4a(2H)-naphthalenyl hydroperoxide, -pinene hydroperoxide and 2,5-dihydro-2-methyl-2-furanyl hydroperoxide, is/are used as regulator(s).

4. Use according to any of Claims 1 to 3, **characterized in that** one or more monomers selected from the group consisting of vinyl esters of unbranched and branched alkylcarboxylic acids having from 1 to 18 carbon atoms, acrylic esters and methacrylic esters of branched and unbranched alcohols and diols having from 1 to 18 carbon atoms, ethylenically unsaturated monocarboxylic and dicarboxylic acids and their amides and N-methylolamides and nitriles, ethylenically unsaturated sulphonic acids, ethylenically unsaturated heterocyclic compounds, dienes, olefins, vinylaromatics and vinyl halides, is/are polymerized.

5. Use according to any of Claims 1 to 4, **characterized in that** the noncopolymerizable hydroperoxides are used simultaneously as regulator and initiator without further free-radical initiators being used.

6. Use according to any of Claims 1 to 5, **characterized in that** the free-radically initiated polymerization of the ethylenically unsaturated monomers is carried out by means of bulk polymerization, solution polymerization, precipitation polymerization, suspension polymerization or emulsion polymerization.

7. Use according to any of Claims 1 to 5, **characterized in that** the free-radically initiated polymerization of the ethylenically unsaturated monomers is carried out by means of suspension or emulsion polymerization in the presence of surface-active substances such as protective colloids and/or emulsifiers.

8. Use according to any of Claims 1 to 7, **characterized in that** all or part of the noncopolymerizable hydroperoxides is metered in.

9. Use according to Claim 8, **characterized in that** the hydroperoxides are used only as regulators and in combination with an initiator, and the hydroperoxide is metered in in a molar ratio of more than 0.2 : 1 to the initiator in the initiation of the polymerization.

10. Use according to Claim 8, **characterized in that** the hydroperoxides are used both as regulator and as initiator, and are initially charged and metered in in such amounts that the molar ratio of hydroperoxide to reducing agent is from 1.2 : 1 to 20 : 1.

## Revendications

1. Utilisation d'hydroperoxydes non copolymérisables de formule générale R-0-0-H en tant que régulateur dans la polymérisation à amorçage radicalaire de monomères à insaturation éthylénique, R pouvant représenter H, un radical alkyle en C₁-C₁₈, un radical aralkyle en C₇-C₂₂ et des noyaux carbocycliques et hétérocycliques saturés et insaturés ayant de 3 à 18 atomes de carbone, et pouvant éventuellement être substitué.

2. Utilisation selon la revendication 1, **caractérisée en ce que** le radical R représente un atome d'hydrogène, un radical isopropyle, tert-butyle, tert-pentyle, 1,1-diméthylbutyle ou 1,1-diméthylpentyle, les radicaux cités pouvant éventuellement être encore substitués par un groupe OH.

3. Utilisation selon la revendication 1, **caractérisée en ce qu'**on utilise en tant que régulateur un ou plusieurs hydroperoxydes choisis dans le groupe comprenant le peroxyde d'hydrogène, l'hydroperoxyde de tert-butyle, l'hydroperoxyde de cumène, l'hydroperoxyde de diisopropylbenzène, l'hydroperoxyde de tert-pentyle, l'hydroperoxyde de 1,1-diméthylbutyle, l'hydroperoxyde de 1,1-diméthylpropyle, l'hydroperoxyde de 1,1-diméthyl-3-hydroxybutyle, l'hydroperoxyde de 1,1,3,3-tétraméthylbutyle, l'hydroperoxyde de p-menthyle, l'hydroperoxyde de pinanyle, l'hydroperoxyde de 1-méthylcyclopentyle, le 2-hydroperoxy-2-méthyltétrahydrofuranne, l'hydroperoxyde de 1-méthoxycyclohexyle, l'hydroperoxyde de 1,3,4,5,6,7-hexahydro-4a(2H)-naphtalényle, l'hydroperoxyde de β-pinène, l'hydroperoxyde de 2,5-dihydro-2-méthyl-2-furannyle.

4. Utilisation selon l'une quelconque des revendications 1 à 3, **caractérisée en ce qu'**on polymérise un ou plusieurs monomères choisis dans le groupe comprenant des esters vinyliques d'acides alkylcarboxyliques ramifiés ou non ramifiés ayant de 1 à 18 atomes de carbone, des esters d'acide acrylique ou des esters d'acide méthacrylique avec des alcools ou des diols ramifiés ou non ramifiés ayant de 1 à 18 atomes de carbone, des acides mono- ou dicarboxyliques à insaturation éthylénique ainsi que leurs amides ou N-méthylolamides et nitriles, des acides sulfoniques à insaturation éthylénique, des composés hétérocycliques à insaturation éthylénique, des diènes, des oléfines, des composés vinylaromatiques et des halogénures de vinyle.

5. Utilisation selon l'une quelconque des revendications 1 à 4, **caractérisée en ce que** les hydroperoxydes non copolymérisables sont utilisés simultanément en tant que régulateur et amorceur, sans utiliser d'autres amorceurs radicalaires.

6. Utilisation selon l'une quelconque des revendications 1 à 5, **caractérisée en ce que** la polymérisation à amorçage radicalaire des monomères à insaturation éthylénique s'effectue par polymérisation en masse, polymérisation en solution, polymérisation par précipitation, polymérisation en suspension ou polymérisation en émulsion.

7. Utilisation selon l'une quelconque des revendications 1 à 5, **caractérisée en ce que** la polymérisation à amorçage radicalaire des monomères à insaturation éthylénique s'effectue par polymérisation en suspension ou en émulsion, en présence de substances tensioactives telles que des colloïdes protecteurs et/ou des émulsifiants.

8. Utilisation selon l'une quelconque des revendications 1 à 7, **caractérisée en ce que** les hydroperoxydes non copolymérisables sont en totalité ou en partie ajoutés de façon réglée.

9. Utilisation selon la revendication 8, **caractérisée en ce que** les hydroperoxydes ne sont utilisés qu'en tant que régulateur et en association avec un amorceur, et lors de l'amorçage de la polymérisation l'hydroperoxyde est ajouté de façon réglée à l'amorceur en un rapport molaire de plus de 0,2:1.

10. Utilisation selon la revendication 8, **caractérisée en ce que** l'hydroperoxyde est utilisé aussi bien en tant que régulateur qu'en tant qu'amorceur, et disposé au préalable et ajouté de façon réglée de manière que le rapport molaire de l'hydroperoxyde au réducteur aille de 1,2:1 à 20:1.
